(19) Europäisches Patentamt
European Patent Office
Office européen des brevets

(11) Veröffentlichungsnummer: **0 269 962**
**A2**

(12) # EUROPÄISCHE PATENTANMELDUNG

(21) Anmeldenummer: **87117129.4**

(22) Anmeldetag: **20.11.87**

(51) Int. Cl.[4]: **C08G 18/42**, C08G 18/76, C09D 3/72

(30) Priorität: **03.12.86 DE 3641217**

(43) Veröffentlichungstag der Anmeldung: **08.06.88 Patentblatt 88/23**

(84) Benannte Vertragsstaaten: **AT BE CH DE ES FR GB IT LI NL SE**

(71) Anmelder: **BAYER AG**
**Konzernverwaltung RP Patentabteilung**
**D-5090 Leverkusen 1 Bayerwerk(DE)**

(72) Erfinder: **Höhlein, Peter, Dr.**
**Windmühleweg 3e**
**D-4152 Kempen 3(DE)**
Erfinder: **Kreiss, Eberhard, Dipl.-Ing.**
**Ratherstrasse 22**
**D-4150 Krefeld(DE)**
Erfinder: **Pedain, Josef, Dr.**
**Haferkamp 6**
**D-5000 Koeln 80(DE)**
Erfinder: **Scholl, Hans-Joachim, Dr.**
**Am Feldrain 5**
**D-5000 Koeln 80(DE)**

(54) **Estergruppen- und Urethangruppen-haltige Bindemittel, Verfahren zu ihrer Herstellung und ihre Verwendung zur Herstellung von Überzügen.**

(57) Estergruppen-haltige Bindemittel, die durch Umsetzung mit $C_6$ -$C_{18}$ -Alkylbenzoldiisocyanaten modifiziert sind, ermöglichen die Herstellung von Überzügen mit hoher Fülle und ausgezeichneter Wasserfestigkeit.

EP 0 269 962 A2

## Estergruppen-und Urethangruppen-haltige Bindemittel, Verfahren zu ihrer Herstellung und ihre Verwendung zur Herstellung von Überzügen

Die Erfindung betrifft oxidativ trocknende Bindemittel, die durch Umsetzung von A) i) Hydroxylgruppen enthaltendem Partialester aus mehrwertigen Alkoholen und langkettigen ungesättigten Fettsäuren und/oder ii) Hydroxylgruppen enthaltendem Alkydharz aus mehrwertigen Alkoholen, langkettigen ungesättigten Fettsäuren und Polycarbonsäuren und B) aromatischem Diisocyanat bestimmter Konstitution zugänglich sind, sowie ein Verfahren zur Herstellung dieser Bindemittel und ihre Verwendung zur Herstellung von Überzügen. Die erfindungsgemäßen Bindemittel ermöglichen die Herstellung von Überzugsmitteln mit hoher Füllkraft, die sich zu Überzügen mit ausgezeichneter Wasserfestigkeit verarbeiten lassen.

Estergruppen und Urethangruppen-haltige oxidativ trocknende Bindemittel sind z.B. Alkydharze, deren Polycarbonsäurekomponente teilweise oder vollständig durch eine oder mehrere Polyisocyanatkomponenten ausgetauscht ist (D.H. Solomon, The Chemistry of Organic Film Formers, John Wiley & Sons, New York 1974, 215). Die Modifizierung von Alkydharzen mit Polyisocyanaten zur Verbesserung der Trocknungseigenschaften ist bekannt (Fette und Seifen 52 (1950), 20). Bei gesättigten und ungesättigten Polyestern ist diese Isocyanatmodifizierung zur Erzielung höherer Härte und besserer Verträglichkeit empfohlen worden (DE-OS 19 15 800).

Obwohl die Isocyanatmodifizierung manche Vorteile mit sich bringt, gibt es auch Eigenschaften, die nicht voll befriedigen können. Hierzu zählen in erster Linie ungenügende Fülle und Trübungserscheinungen in unpigmentierten Lackfilmen sowie mäßige Wasserfestigkeit der erhaltenen Überzüge.

Aufgabe der Erfindung war es daher, oxidativ trocknende Estergruppen-und Urethangruppen-haltige Bindemittel bereitzustellen, die die geschilderten Nachteile nicht aufweisen.

Überraschenderweise wurde gefunden, daß mit langkettigen Kohlenwasserstoffresten kernsubstituierte Phenylendiisocyanate zu modifizierten Bindemitteln führen, die die gestellten Anforderungen hervorragend erfüllen.

Gegenstand der Erfindung sind Estergruppen-und Urethangruppen-haltige oxidativ trocknende Bindemittel, erhältlich durch Umsetzung von

A) 60 bis 98 Gew.-% Ester mit einer Öllänge von 20 bis 75 Gew.-% und einer OH-Zahl von 20 bis 150, vorzugsweise 30 bis 100, aus der Reihe

i) Partialester aus mehrwertigen Alkoholen und langkettigen ungesättigten Fettsäuren und/oder

ii) Polyester aus mehrwertigen Alkoholen, langkettigen ungesättigten Fettsäuren und Polycarbonsäuren mit

B) 40 bis 2 Gew.-% Polyisocyanat der Struktur

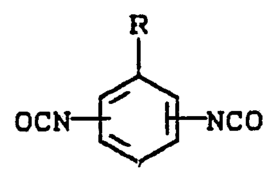

worin

R einen $C_6$ -$C_{18}$ -, vorzugsweise $C_8$ -$C_{15}$ -, insbesondere $C_{10}$ -$C_{13}$ -Alkylrest bedeutet.

Die Prozentangaben von A) plus B) beziehen sich jeweils auf die Summe A) und B).

Die Partialester i) und die Polyester ii) sind von der Herstellung oxidativ trocknender Urethanalkydharze und Alkydharze bekannt (H. Kittel, Lehrbuch der Lacke und Beschichtungen, Bd. 1, Teil 2, S. 567-571 und D.H. Solomon, The Chemistry of Organic Film Formers, John Wiley & Sons, New York 1974, S. 214, 215).

Für die Synthese der Partialester i) und der Polyester ii) bevorzugte Alkohole sind aliphatische, cycloaliphatische und/oder araliphatische Alkohole mit 2-15, vorzugsweise 3-8 C-Atomen, und 2-6, vorzugsweise 3-4, an nichtaromatische C-Atome gebundenen OH-Gruppen pro Molekül, z.B. Glykole wie Ethylenglykol, Propandiol-1,2 und -1,3, Butandiol-1,2, -1,3 und -1,4, 2-Ethylpropandiol-1,3, 2-Ethylhexandiol-1,3, Neopentylglykol, 2,2-Trimethylpentandiol-1,3, Hexandiol-1,6, Cyclohexandiol-1,2 und -1,4, 1,2-und 1,4-Bis-(hydroxymethyl)cyclohexan, Adipinsäure-bis-(ethylenglykolester); Etheralkohole wie Di-und Triethylenglykol, Dipropylenglykol; Dimethylolpropionsäure, oxalkylierte Bisphenole mit zwei $C_2$ -$C_3$ -Oxalkylgruppen pro Molekül, perhydrierte Bisphenole; Butantriol-1,2,4, Hexantriol-1,2,6, Trimethylolethan, Trimethylolpropan, Trimethylolhexan, Glycerin, Pentaerythrit, Dipentaerythrit, Mannit und Sorbit. Die gebräuchlichsten Alkohole sind Glycerin, Trimethylolpropan, Neopentylglykol und Pentaerythrit. Die für die Synthese der Partialester i)

bevorzugten mehrwertigen Alkohole bestehen ganz oder zum überwiegenden Teil (mehr als 50 Mol-%) aus mindestens 3-wertigen Alkoholen.

Für die Synthese der Partialester i) und der Polyester ii) bevorzugte langkettige ungesättigte Fettsäuren enthalten im allgemeinen 6 bis 24 C-Atome und umfassen die Fettsäuren des Leinöls, Sojaöls, Holzöls, Saffloröls, Baumwollsaatöls, dehydratisierten Ricinusöls und Trans, Fraktionen dieser Fettsäuren, Tallölfettsäure, ferner aus den Säuren oder deren Estern durch Konjugierung oder Isomerisierung gewonnene Fettsäuren.

Für die Synthese der Polyester ii) bevorzugte Polycarbonsäuren sind aliphatische, cycloaliphatische gesättigte oder ungesättigte und/oder aromatische mehrbasische Carbonsäuren, vorzugsweise Di-, Tri-und Tetracarbonsäuren, mit 2 bis 14, vorzugsweise 4 bis 12 C-Atomen pro Molekül oder deren veresterungsfähige Derivate (z.B. Anhydride oder Ester), z.B. Phthalsäureanhydrid, Isophthalsäure, Terephthalsäure, Tetrahydro-und Hexahydrophthalsäureanhydrid, Endomethylentetrahydrophthalsäure, Bernsteinsäure, Glutarsäure, Sebacinsäure, Azelainsäure, Trimellithsäure und Trimellithsäureanhydrid und Pyromellithsäureanhydrid. Phthalsäureanhydrid ist die gebräuchlichste Säurekomponente.

Die Öllänge der Ester A) wird als Triglycerid, bezogen auf Ester A), berechnet.

Die Partialester i) besitzen ein Molekulargewicht von 500 bis 2000, vorzugsweise von 800 bis 1600, die Polyester ii) ein solches von 1000 bis 10000, vorzugsweise von 1500 bis 8000 bestimmt durch Gelpermeationschromatographie (GPC) an Styragelen mit Tetrahydrofuran als Elutionsmittel. Dabei werden nach Erstellung einer universellen Eichbeziehung (s. Z. Grubisic, R. Rempp, H. Bevoit, J. Polym. Sci. Part B. Polymer Letters 5 (1967) 745) aus der Verteilung der Chromatogramme die Molekulargewichtsmittelwerte Mn bestimmt.

Die Polyisocyanate B) und ihre Herstellung sind bekannt; vgl. DE-OS 31 05 776. Sie können beispielsweise aus Alkylbenzolen durch Nitrierung, nachfolgende Hydrierung und anschießende Phosgenierung hergestellt werden. Typische Polyisocyanate B) sind solche, in denen R für Hexyl, Nonyl, Decyl, Undecyl, Dodecyl, Tridecyl, Tetradecyl oder Hexadecyl steht, wobei diese Reste sowohl linear als auch verzweigt sein können. Die Isocyanatgruppen stehen in der Regel zu 70 bis 90 % in 2,4-und zu 30 bis 10 % in 2,6-Position.

Die aus den Komponenten A) und B) erhältlichen Bindemittel besitzen im allgemeinen Säurezahlen von <1 bis 20, Hydroxylzahlen von 0 bis 120 und als Zahlenmittel bestimmte Molekulargewichte von 2000 bis 10 000 (bis zu Molekulargewichten von 5000 dampfdruckosmometrisch bestimmt in Dioxan und Aceton, wobei bei differierenden Werten der niedrigere Wert als korrekt angesehen wird; bei Molekulargewichten über 5000 membranosmometrisch in Aceton bestimmt).

Die erfindungsgemäßen Bindemittel können aus dem Partialester i) und/oder dem Polyester ii) und dem Diisocyanat B) durch Erhitzen auf Temperaturen von 60 bis 160°C, vorzugsweise 75 bis 140°C, hergestellt werden. Die Reaktion kann man abbrechen, wenn der Isocyanatgehalt unter 1 Gew.-% gesunken ist.

Weiterer Gegenstand der Erfindung ist also ein Verfahren zur Herstellung der erfindungsgemäßen Bindemittel durch Erhitzen der Komponenten A) und B).

Um aus den erfindungsgemäßen Bindemitteln gebrauchsfertige Überzugsmittel herzustellen, wird man übliche Zusätze einarbeiten, wie z.B. organische Lösungsmittel, Sikkative, Verlaufsmittel, Hautverhinderungsmittel, Antischaummittel, viskositätsregulierende Stoffe, Pigmente, Farbstoffe, Härtungskatalysatoren, UV-Absorber, Stabilisatoren gegen thermischen bzw. oxidativen Abbau, usw.

Bevorzugte organische Lösungsmittel sind z.B. einwertige Alkohole wie Methanol, Ethanol, Isopropanol, Carbonsäurealkylester wie Essigsäureethyl-und -butylester, Etheralkohole wie Ethylen-und Propylenglykolmonoethylether, Etherester wie Ethylglykolacetat, Propylglykolacetat, Ketone wie Methylethylketon, Methylisobutylketon, Cyclohexanon, Aromaten wie Toluol, Xylol, und aliphatische Kohlenwasserstoffe wie verschiedene Benzinfraktionen.

Die organischen Lösungsmittel werden vorzugsweise in Mengen von 20 bis 70 Gew.-%, bezogen auf Überzugsmittel, eingesetzt.

Als Substrat für die mit den erfindungsgemäßen Bindemitteln hergestellten Überzugsmittel eignen sich Metall, Holz, Kunststoff und mineralische Untergründe. Die Applikation kann nach den üblichen Methoden der Lacktechnologie, beispielsweise durch Spritzen, Streichen, Gießen, Tauchen oder Walzen, erfolgen. Die Überzugsmittel werden im allgemeinen in solchen Mengen aufgetragen, daß Trockenfilmstärken der Überzüge zwischen 0,005 und 0,10 mm resultieren.

Die Trocknung erfolgt in der Regel bei Raumtemperatur.

Bei den nachfolgenden Beispielen beziehen sich alle Prozentangaben auf das Gewicht, alle Angaben in "Teilen" bedeuten Gewichtsteile.

Beispiel 1

In einem 5-1-Rührkessel mit Veresterungsaufsatz und Stickstoffeinleitungsrohr wurden 3892 g Sojaöl, 608 g Pentaerythrit und 0,92 g Dibutylzinnoxid eingewogen, in ca. 3 Stunden unter Durchleiten von 6 l Stickstoff/Stunde auf 240°C aufgeheizt und bei dieser Temperatur umgeestert, bis eine Mischung von 1 Teil Veresterungsgemisch in 15 Teilen Ethanol beim Abkühlen auf 20°C klar blieb. Nach dem Abkühlen auf 150°C wurden 694 g entnommen. Zu den im Kessel verbleibenden 3806 g Umesterungsgemisch wurden 203 g Trimethylolpropan und 558 g Phtahlsäureanhydrid gegeben. Nach dem Aufheizen auf 210°C wurde unter Durchleiten von ca. 12 l Stickstoff/Stunde solange verestert, bis eine Säurezahl von 0,8 und eine Viskosität entsprechend einer Auslaufzeit, 95 %ig in Xylol, von 205 Sekunden erreicht war. Danach wurde auf 130°C abgekühlt.

Zu 2238 g dieses Harzes wurden unter Durchleiten von ca. 2 l Stickstoff/Stunde 1800 g Benzin und 683 g 2,4-Diisocyanatoalkylbenzol[1)] gegeben und die Urethanisierungsreaktion solange fortgesetzt, bis ein NCO-Gehalt von 0,08 % erreicht war. Bei 80°C wurden dann 11,5 g Phthalsäureanhydrid zugegeben und 4 Stunden bei 80°C gerührt.

[1)] 2,4-Diisocyanatoalkylbenzol, Kettenlänge der Alkylgruppe $C_{10}$ -$C_{13}$ , hergestellt durch Disproportionierung einzelner Fraktionen aus der Ethylen-Oligomerisierungsreaktion und nachfolgende Friedel-Craft-Alkylierung des $C_{10}$ -$C_{13}$ - $\alpha$-Olefingemisches mit Benzol

Es resultierte eine Harzlösung mit einem Feststoffgehalt von 60,5 %, einer Viskosität von 807 mPa.s, einer Säurezahl von 1,8 und einer OH-Zahl von 24.

Beispiel 2

In einem 4-1-Dreihalskolben (Stickstoffeinleitungsrohr, Veresterungsaufsatz, Kolonne) wurden 1147 g Tallölfettsäure, 122 g Glycerin, 68 g Propandiol-1,2, 205 g Pentaerythrit und 262 g Phthalsäureanhydrid eingewogen und unter Begrenzung der Kopftemperatur auf maximal 105°C bei Durchleiten von 1 l Stickstoff/Stunde in 10 Stunden auf 220°C aufgeheizt. Als die Kopftemperatur unter 95°C absank, wurde die Kolonne entfernt, der Stickstoffstrom auf 9 l/Stunde erhöht und die Veresterung solange fortgeführt, bis 103 g Wasser abdestilliert worden waren. Es wurde ein Harz mit einer Säurezahl von 0,9 und einer Viskosität entsprechend einer Auslaufzeit von 84 Sekunden, 85 %ig in Xylol (DIN 53211), erhalten.

840 g des so hergestellten Harzes wurden in 1150 g Benzin gelöst und mit 310 g 2,4-Diisocyanatoalkylbenzol[1)]versetzt. Die Isocyanatreaktion wurde unter Überleiten von 1 l Stickstoff/Stunde stufenweise bei 25°C, 70°C und 120°C innerhalb von 20 Stunden bis zu einem NCO-Gehalt von 0,12 % und einer Viskosität entsprechend einer Auslaufzeit von 47 Sekunden, 45 %ig in Benzin (DIN 53211), durchgeführt.

Es resultierte eine 50,5 %ige Harzlösung mit einer Säurezahl von 0,6, einer Viskosität von 1477 mPa.s und einer Dichte von 0,897 g/cm$^3$.

Beispiel 3

Es wurde analog Beispiel 2 verfahren. Die Umesterungsstufe wurde auf Basis von 6779,4 g Sojaöl, 2268 g Trimethylolpropan und 740,8 g Pentaerythrit bei 250°C in einem 15-1-Rührkessel hergestellt. Unter Zusatz von 4294 g Phthalsäureanhydrid wurde durch Veresterung unter Abspaltung von 522 g Wasser bei 225°C ein Harz mit einer Säurezahl von 8,3 und einer Viskosität entsprechend einer Auslaufzeit von 61 Sekunden in 40 %iger Benzinlösung hergestellt, 6780 g dieses Harzes wurden in 6246 g Benzin gelöst und unter Zugabe von 656 g 2,4-Diisocyanatoalkylbenzol [1)] und Durchleiten von ca. 2 l Stickstoff/Stunde bei 80°C umgesetzt, bis ein NCO-Gehalt von 0,06 % erreicht war. Es resultierte eine 54,5 %ige Harzlösung mit einer Viskosität von 18780 mPa.s und einer Säurezahl von 6,9.

Vergleichsbeispiel 1

Analog Beispiel 1 wurde ein Bindemittel hergestellt, wobei auf 2238 g Harz und 1800 g Benzin 462 g Isophorondiisocyanat eingesetzt wurden. Es resultierte ein Bindemittel mit einem Feststoffgehalt von 60,2 %, einer Viskosität von 4576 mPa.s, einer Säurezahl von 2,1 und einer OH-Zahl von 2,6.

Vergleichsbeispiel 2

Analog Beispiel 2 wurde ein Bindemittel hergestellt, wobei aus 1550 g des Harzes, 1853 g Benzin und 303 g Toluylendiisocyanat-2,4 eine Harzlösung mit einem NCO-Gehalt von 0,7 %, einer Viskosität von 451 mPa.s, einer Säurezahl von 0,4 und einem Feststoffgehalt von 51,5 % erhalten wurde.

Herstellung eines Klarlackes

Nach der unten aufgeführten Rezeptur wurden aus den Bindemitteln der Beispiele 1 und 2 und den Vergleichsbeispielen 1 und 2 Klarlacke hergestellt, die nach Lufttrocknung Überzüge mit den dargestellten Werten ergaben (Schichtdicke der Überzüge bei Applikation 120 µm).

Jedem Ansatz waren vor Applikation 1 Teil Verlaufsmittel, 2,5 Teile Calciumoctoat, 0,66 Teile Cobaltoctoat (6 % Co), 1,66 Teile Bleioctoat (24 % Pb) und 2,50 Teile Hautverhinderungsmittel zugesetzt worden. Durch Zugabe der angegebenen Benzinmengen wurden die Lacklösungen auf eine Viskosität entsprechend einer Auslaufzeit von 120 sec (DIN 53 211) eingestellt.

| | Beispiel 1 | Beispiel 2 | Vergleich 1 | Vergleich 2 |
|---|---|---|---|---|
| Harzlösung (Teile) | 166,8 | 196 | 166,2 | 196 |
| Testbenzin (Teile | 24,2 | 35 | 41,7 | 42,3 |
| Feststoffgehalt (%) | 58,2 | 45,4 | 50,1 | 41,9 |
| Wasserfestigkeit (h) | 24 | >24 | 4 | <4 |

<u>Herstellung eines Weißlackes</u>

Nachfolgend werden die Bindemittel der Beispiele 1 und 3 und des Vergleichs 1 miteinander verglichen. Der Weißlack wurde so hergestellt, daß das fertige Überzugsmittel eine Viskosität entsprechend einer Auslaufzeit von 150 s aufwies.

Der Weißlack wurde in einer Naßfilmschichtdicke von 120 $\mu m$ auf Glasplatten aufgezogen und Fülle und Brillanz der getrockneten Filme nach 24 Stunden Lufttrocknung gemessen.

| | Beispiel 1 | Beispiel 3 | Vergleich 1 |
|---|---|---|---|
| Bindemittel | 166,7 | 183,5 | 166,1 |
| Calciumoctoat (4 % Ca-Gehalt) | 3,75 | 3,75 | 3,75 |
| Montmorillonit | 1,50 | 1,50 | 1,50 |
| Titandioxid | 70,00 | 70,00 | 70,00 |
| Cobaltoctoat (6 % Co) | 0,66 | 0,66 | 0,66 |
| Bleioctoat (25 % Pb) | 2,50 | 2,50 | 2,50 |
| Methylethylketoxim, 55 %ig in Testbenzin | 1,50 | 1,50 | 1,50 |
| Mattierungsmittel (hochdisperse Kieselsäure) | 10,00 | 10,00 | 10,00 |
| Benzin | 26,30 | 9,60 | 28,50 |
| Brillanz nach Lagerung der Überzüge bei Raumtemperatur | | | |
| schleierfrei | >8 Wochen | >8 Wochen | <2 Wochen |
| Fülle | gut | gut | schlecht |

**Ansprüche**

1. Ester-und Urethangruppen-haltige oxidativ trocknende Bindemittel, erhältlich durch Umsetzung von A) 60 bis 98 Gew.-% Ester mit einer Öllänge von 20 bis 75 Gew.-% und einer OH-Zahl von 20 bis 150 aus der Reihe
i) Partialester aus mehrwertigen Alkoholen und langkettigen ungesättigten Fettsäuren und/oder
ii) Polyester aus mehrwertigen Alkoholen, langkettigen ungesättigten Fettsäuren und Polycarbonsäuren mit
B) 40 bis 2 Gew.-% Polyisocyanat der Struktur

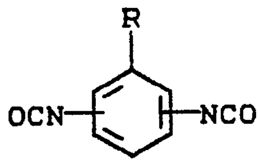

worin
R einen $C_6$ -$C_{18}$ -Alkylrest bedeutet.

2. Verfahren zur Herstellung der Bindemittel nach Anspruch 1 durch Erhitzen der Komponenten A und B.

3. Verwendung der Bindemittel nach Anspruch 1 zur Herstellung von Überzügen.